# EUROPEAN PATENT SPECIFICATION

(11) **EP 2 855 365 B1**
(45) Date of publication and mention of the grant of the patent: **23.11.2016**
(21) Application number: 13797529.8
(22) Date of filing: 30.05.2013
(51) Int. Cl.: C02F 1/32, C02F 1/78

(54) **SANITIZER SYSTEM**
ENTKEIMUNGSSYSTEM
SYSTÈME DE STÉRILISATION D'EAU

(30) Priority: 30.05.2012 US 201261689167 P
(43) Date of publication of application: 08.04.2015
(73) Proprietor: Barnes, Ronald L., Owens Cross Roads, AL 35763 (US)
(72) Inventor: Barnes, Ronald L., Owens Cross Roads, AL 35763 (US)
(74) Representative: Walsh, Marie Goretti
(86) International application number: PCT/US2013/043485
(87) International publication number: WO 2013/181469

(56) References cited:
- US-A- 5 266 215
- US-A- 5 622 622
- US-A1- 2002 070 180
- US-A1- 2009 001 029
- US-A1- 2009 185 953
- US-B1- 6 280 615

## Description

### FIELD OF THE INVENTION

This application relates generally to water sanitizers, and particularly to a water sanitizer wherein a flow of water is routed through an ultraviolet-transmissive tube, with a plurality of ultraviolet lamps disposed around the tube so that ultraviolet light of both 255nm and 184nm wavelengths is passed into the water flowing through the tube. The lamps and tube are mounted in a housing, with a flow of air provided through the housing so that the ultraviolet light also produces ozone, which is also provided to the water flowing through the tube.

### BACKGROUND OF THE INVENTION

In a conventional ultraviolet light sanitizer, ultraviolet light is used to produce ozone, which in turn is provided to a flow of water in order to sanitize the water.

It is also known to use both ozone and ultraviolet light to effect sanitization of water flowing therethrough.

US Patent 5,266,215 describes an apparatus where ozone is produced by the ultraviolet lamp that is used for irradiating the water to be treated and the ozone is introduced into the water using a Venturi mixer.

The present application relates to a water sanitizer comprising at least one ultraviolet lamp and at least a first and second Venturi mixer, as defined in claim 1.

### BRIEF DESCRIPTION OF THE DRAWINGS

Fig. 1 is a sectional view of one embodiment of my new sanitizing system.
Fig. 2 is a sectional view through a Venturi mixer of the present invention.
Fig. 3 is a sectional view of another embodiment of my new sanitizing system.
Fig. 4 is a diagrammatic view of one embodiment of an ozone-producing portion of my new sanitizing system.
Fig. 5 is a diagrammatic view of another ozone-producing portion of my new sanitizing system.
Fig. 6 is a diagrammatic view of a hydroxyl producing portion of my new sanitizing system.
Fig. 7 is a diagrammatic view of how ozone-carrying tubes of my new system may be connected.

### DETAILED DESCRIPTION OF T HE DRAWINGS

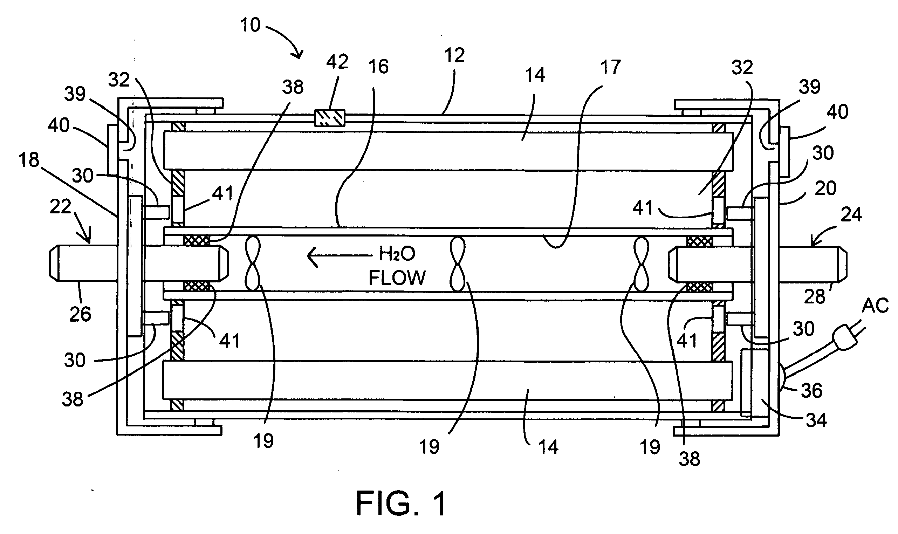

Referring initially to Fig. 1, a water sanitizer 10 of the instant invention is shown. Here, a reflector 12 may be generally circular, rectangular or in any other convenient shape, and which may also form the housing for the ozone generator. In other embodiments, a housing may be provided separately from a reflector, and may be formed of a non-reflective material, with one or more reflectors mounted within the housing near inner walls thereof. The housing may also be constructed of aluminum in order to dissipate and radiate heat, and may further be provided with heat-radiating fins. In one embodiment, the reflector 12 is configured to generally focus light from one or more ultraviolet lamps 14 (conventionally connected to electrical power, also not shown) into a tube 16 through which water to be sanitized is flowing. In these instances, reflector 12 may be configured to be parabolic, hyperparabolic, circular or any other shape that focuses or reflects light into tube 16. As noted, in some instances, reflector 12 may form an exterior housing of sanitizer 10, such as where the housing is constructed of polished aluminum or polished stainless steel, and as noted, in other instances a separate housing may enclose sanitizer 10, including reflector 12. In other embodiments, the housing may be omitted entirely, with only a reflector being provided to reflect or direct ultraviolet light as needed. Reflector 12 is of a material that reflects at least the 254 nm wavelength of the mercury arc. To implement this, the reflector may be of aluminum, preferably anodized, or Teflon™ coated to prevent corrosion. In other embodiments, a plurality of ultraviolet lamps may be disposed around tube 16. The number of lamps used may be determined by water flow velocity through tube 16. Here, since water flowing through tube 16 is to be sterilized by a combination of ultraviolet light and ozone, a faster water flow would require more lamps to produce a higher intensity of germicidal ultraviolet light and larger quantity of ozone, which kills or neutralizes any microbiota almost instantly in the water flowing through tube 16, and a slower water flow would require fewer lamps that produce less intense germicidal ultraviolet light and less ozone, but which are still sufficiently intense to kill microbiota in the slower-moving water. The ozone is injected into the water flowing through tube 16, as will be further explained.

Ultraviolet lamp or lamps 14 are ultraviolet lamps that produce intense germicidal ultraviolet light predominantly at 184 nm and 254 nm. In addition, the 184 wavelength creates ozone. In some embodiments, such as in an ozone generator for use in spas, hot tubs, jetted tubs and the like, the ultraviolet tubes may be about 19 - 30.5 cm (7.5 - 12 inches) long, with the container/housing 12 being about 20.3 - 40.6 cm (8 - 16 inches) long and 7.6 - 12.7 cm (3 - 5 inches) in diameter. As such, up to 6 to 8 ultraviolet tubes may be fitted into such a container, and arranged lengthwise around water-carrying tube 16. Where necessary, at least some of the ballasts may be mounted to, in close proximity to or around the exterior of housing 12, or more powerful ballasts configured to drive a plurality of tubes may be used to drive 2 or more ultraviolet lamps. In other embodiments, such as for a swimming pool, the ultraviolet tubes may be 30.5 - 61 cm (12 - 24 inches) or more, with housing 12 sized slightly longer, perhaps by 15.2 - 20.3 cm (6 - 8 inches) or so, and between about 15.2 and 30.5 cm (6 and 12 inches) in diameter. Again, the plurality of ultraviolet tubes are clustered around a water-carrying tube 16. In some embodiments, and as noted, the ultraviolet tubes would be mounted in close proximity to housing 12 in order to dissipate heat, and housing 12 could be provided with heat-dissipating fins, water channels, one or more cooling fans or the like. Of course, some heat would be carried away by the water flowing through tube 16, but other cooling means may be necessary. In addition, in some embodiments, the ultraviolet tubes may be mounted in close proximity to water-carrying tube 16, such as from about 0.6 to 5 cm (about 0.25 to 2 inches) or so, in order to apply as much ultraviolet light as possible to water-carrying tube 16. As the 184 nm wavelength, which is highly energetic and most effective in germicidal applications, degrades or is absorbed after only a short distance through atmospheric gasses, locating the ultraviolet tubes as close as possible to the water to be sterilized takes full advantage of their energetic properties.

The transparent housings of the ultraviolet tubes, which contain ultraviolet during operation, is of a material, typically pure or ultrapure quartz, that readily passes both the 184 and 255 wavelengths. As such, the quartz envelopes of the lamps may be especially made In addition, the ultraviolet lamp/lamps may be of the hybrid type disclosed in Applicant's US patent no. 6,951,633, issued 10/04/2005, wherein the exterior of the lamp is wrapped with a wire through which a pulsed voltage, such as a square wave, a spike from a flyback transformer or the like is passed in order to develop a theta pinch on the mercury plasma, and also energize the air in the immediate vicinity of the lamp. The theta pinch drives electrons in the mercury plasma away from the inner surface of the quartz walls, which causes the lamps to operate at cooler temperatures, and extends the life of the ultraviolet lamps by reducing collisions of the electrons with the quartz walls, which otherwise would degrade the quartz and reduce efficiency of the quartz in passing UV radiation.

Tube 16 through which water is flowing may be constructed of any material that is durable, and which allows passage of germicidal ultraviolet light therthrough, such as the aforementioned pure or ultrapure quartz. Significantly, the interior of tube 16 may be coated with a non-stick surface 17, such as one or more of the class of Teflons™ such as FEP and TFE. Here, one of the major problems with germicidal light sterilizers currently available is the fact that debris and oils tend to stick to the sides of transparent tubes or vessels through which water to be sanitized is flowing, reducing efficiency of the sterilizing apparatus. By coating such interior surfaces with a non-stick or hydrophobic surface or the like, the debris and oils do not stick to these interior surfaces and efficiency of the sterilizer is maintained. It is noted that FEP and TFE are also transparent to ultraviolet light. In other embodiments, tube 16 itself may be fabricated of TFE or FEP. As such, germicidal ultraviolet light may be applied directly, by reflection and focusing, to water flowing through tube 16. Static mixers 18 may also be fixed in tube 16 in order to create turbulence in the water flowing through tube 16, mixing the water so that as much as possible is exposed to ultraviolet germicidal radiation from lamp/lamps 14.

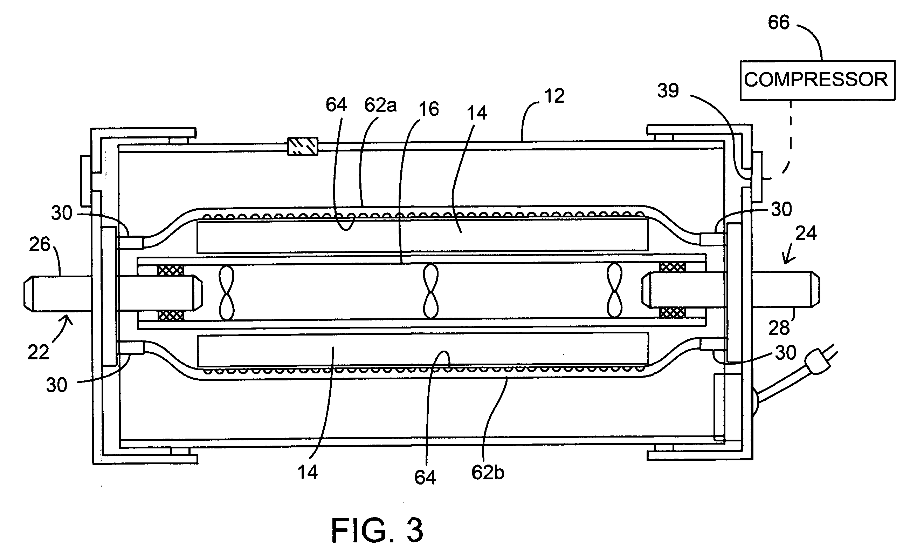

Ends 18, 20 serve to enclose ends of the sanitizer, whether against reflector 12 or another exterior housing. According to the invention, ends 18, 20 support water tube 16 via Venturis 22, 24, respectively. These Venturis may be those as disclosed in Applicant's US patent no. 6,192,911, issued 2/27/2001, and which are provided with an annular cavity around the motive flow through the Venturi, the cavity communicating with multiple suction ports used to draw fluids and gasses into the motive flow. Each of these Venturis are provided with a water inlet port 26 and water outlet port 28, assuming water flow through tube 16 is from right to left, and as stated, multiple suction ports 30. Significantly, the suction ports 30 are oriented near the ultraviolet tube so as to draw ozone directly from the interior of housing 12 into the flow of water through tube 16. This eliminates tubing that would otherwise be necessary to connect an ozone generator to the Venturi. Such a construction also increases the amount of ozone available for sanitization due to greatly reducing the distance the ozone must travel before being put into the water, which in turn reduces the amount of ozone that breaks down and recombines into diatomic oxygen. In addition, by properly sizing the Venturis so that the downstream Venturi 22 has a larger inlet opening, more air flow, and thus more ozone, is created and injected into the water flowing through tube 16. In other embodiments, one or more of the downstream Venturi suction ports may be reversed and oriented on the outside of housing 12, and connected to a source of other chemicals, such as buffering compounds or compounds used to balance pH. In other embodiments, such as swimming pools using biguanide products as a sanitizer, hydrogen peroxide sanitizer, algicides, Ph adjusting agents, buffering agents and the like may be applied to the pool water via a reversed suction port on one of the Venturis. Such a reversed suction port is seen in the embodiment of Fig. 3, wherein suction ports 31 are provided to support the addition of chemicals, either in the upstream Venturi 24 or the downstream Venturi 22, or both. Also, chemicals such as a sanitizer, algicide, clarifier, pH adjusting or buffering agents and other chemicals for a facility using a salt chlorine generator may be applied via one of these Venturis. In yet other embodiments, a single Venturi having multiple suction inlets may be used at the upstream end (Venturi 24) to draw ozonated air directly from the interior of the sanitizer and from near ultraviolet tubes 14 into the flow of water, with the outlet being conventionally supported by end 18. In any case, at least ozone is injected into the water and almost instantly exposed with the water to intense ultraviolet light, creating opportunity for advanced oxidation and other reactions.

When used in a spa, hot tub or the like, the contact distance for dissolving ozone may be short, so static mixers 19 may be provided in water carrying tube 16. These static mixers create turbulence that breaks up any laminar flow that may develop, and provide a better opportunity for ozone to be mixed in the water and to promote the advanced oxidation and other reactions. In other embodiments, a mixer of Applicant's design may be substituted for Venturi 22, as will be further explained.

Other components include supports 32 at each end or side of the sanitizer, and which support the ultraviolet lamp/lamps, and water tube 16 via Venturis 22, 24. On one of supports 32 may be mounted a ballast 34, which may be an electronic ballast, with a cord/strain relief 36 passing through end 20 for connection to electrical power. As noted earlier, other ballasts may be mounted as needed on the outside of the sanitizer, or nearby in one or more separate enclosures. A silicone or other suitable seal 38 may be used at each end of water tube 16 to seal between the water tube and the respective Venturi outlet/inlet. An air inlet 39, for example in end 20, to allow air to be drawn through the housing is provided, and may be equipped with a filter 40. As described, this air is ozonated and drawn into the flow of water directly from the interior of the sanitizer from a region directly around ultraviolet lamps 14. Where supports 32 are disk-like, solid supports, openings 41 may be provided to allow free passage of air from near the ultraviolet lamps 14 to the Venturi suction ports 30. In other embodiments, at least one or more openings 39 may be provided anywhere in enclosure 12 to provide airflow past the ultraviolet lamps 14.

A window 42 may be provided for optically coupling radiation from lamp/lamps 14 to sensing or monitoring circuitry, or for observation to determine that the lamp/lamps are working.

In use, the water sanitizer 10 may be connected in series via Venturi inlet 26 and Venturi outlet 28 to any flowing source of water that needs to be sanitized. Where the water flow is in a spa, hot tub or the like, the sanitizer could be connected in a low pressure water circuit for a filter and heater. Where the sanitizer is connected to a filter circuit of a swimming pool, the sanitizer can be connected in a bypass loop wherein pressure differential across the filter develops the motive flow through the Venturi, or in a bypass-type loop configuration wherein the motive flow is powered by at least a scoop on the inlet line of the loop to force water through the loop, as disclosed in Applicant's US patent no. 8,323,511, issued Dec. 4, 2012. In addition, an outlet of the loop may be positioned so that water is drawn from the loop, also as disclosed in the referenced patent. Also as noted in the referenced patent, saddle clamps may be installed in a primary flow line, and which hold an angled inlet tube to direct water flow through the sanitizer.

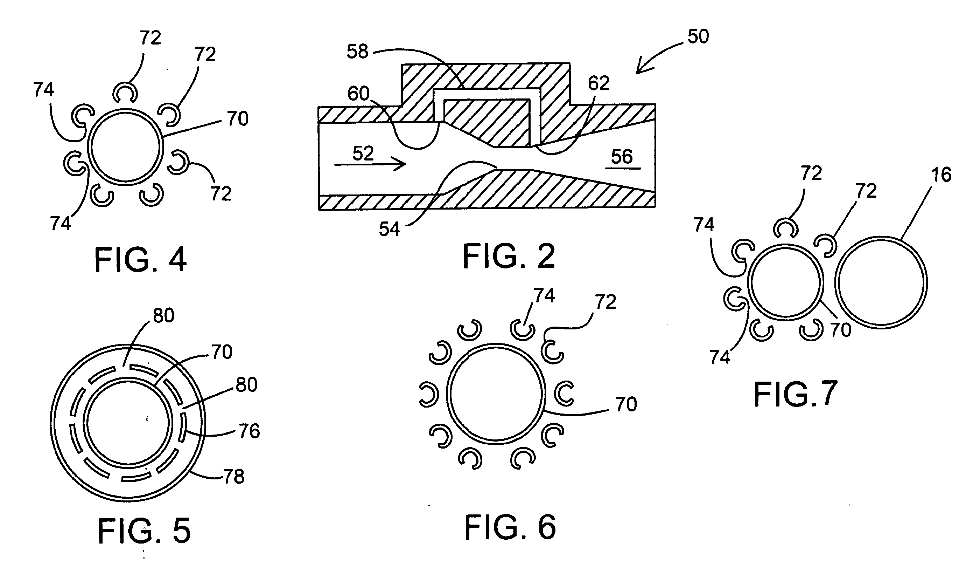

In other embodiments of the disclosed water sanitizer, and as shown in Fig. 2, a venturi-like mixer 50 may be used to further mix ozone and water flowing through tube 16. Here, water flows through a typical Venturi inlet 52, a constriction 54 and an outlet 56 that is typically several times longer than the inlet. Rather than having a suction port, a bypass tube or passage 58 is provided, and which extends between a point 60 where the inlet just begins to narrow to a point 62 where the greatest suction from the Venturi occurs. When this mixer 50 is substituted for the downstream Venturi 22 (Fig. 1), with an outlet of mixer 50 supporting one end of the water carrying tube 16, a portion of the mixture of ozone-containing air and water provided by Venturi 24 that flows through tube 16 and mixer 50 is drawn through bypass 58 and reinjected into the stream of water and ozone-containing air, which creates considerably more turbulence than a second Venturi. As such, a froth of air, ozone and water is passed from mixer 50, which may considerably reduce a required contact distance for ozone to dissolve into the water. As noted, mixer 50 is substituted for the downstream Venturi 22 in Fig. 1.

In yet another embodiment as shown by way of illustration only in Fig. 3, Venturi suction ports 30 are each connected to tubing 62, each of the sections of tubing 62a, 62b connected as shown at each end between respective upper and lower pairs of Venturi suction ports 30. Sections of tubing 62a, 62b are positioned to run as shown substantially the entire length of ultraviolet tubes 14, and very close to or even touching tubes 14, with possible spacings being within 0.3 - 1.3 cm (1/8 - 1/2 inch) or so to the surface of tubes 14. In larger designs using larger ultraviolet tubes, this distance may be extended up to about 2.5 - 7.6 cm (1 - 3 inches) or so, depending on the intensity of ultraviolight light emitted from the plasma tube or tubes. A multitude of small holes or openings 64 in tubes 62a and 62b extend the length of ultraviolet tubes 14, and may be spaced anywhere from up to about 0.3 - 2.5 cm (1/8 - 1 inch) apart, depending on airflow through tubes 62a and 62b. In other embodiments, a single slot in an air tube 62a, 62b may run the length of a respective ultraviolet lamp. With this construction, the Venturi suction developed by Venturis 22, 24 is felt inside tubes 62a and 62b, causing air to be drawn into tubes 62a and 62b via the plurality of openings 64 in each of tubes 62a and 62b. In other embodiments, a compressor 66 may be used to force air through opening 39 in order to pressurize the interior of housing 12 to increase or adjust airflow into openings 64.

Significantly, the air drawn or forced into tubes 62a and 62b is air that is in very close proximity to the quartz surface of ultraviolet tubes 14, and thus is enriched in ozone over and above an ozone level obtained from the embodiment of Fig. 1. This is because the 185 nm wavelength of ultraviolet light propagates through air at atmospheric pressure only a very short distance before being absorbed by oxygen molecules such that the intensity of the 185 nm wavelength is reduced by about half only 1.3 cm (1/2 inch) or so from the surface of tubes 14. In contrast, the 255 nm wavelength propagates through air much better, and in an ozone generator environment is only degraded when impinging an ozone molecule, which absorbs the 255 nm wavelength and breaks down into diatomic oxygen and a free oxygen atom, which in turn quickly combines with atmospheric water vapor to form a hydroxyl radical. As such, much of the ozone created in an ultraviolet ozone generator is destroyed before it can be emitted for use. It has been found that more ozone can be obtained from an ultraviolet by drawing the ozone directly from the quartz surface of ultraviolet tubes 14, where the intensity of the 185 nm wavelength is highest and the most ozone is available to be drawn off. Also significantly, when combined with proper pulsing of the ultraviolet tubes, another beneficial effect is obtained. Here, pulsing of the ultraviolet tubes with a high current, high voltage spike pulse train, as might be obtained from a flyback transformer or the like, causes very intense bursts of ultraviolet light in both the 185 nm and 255 nm wavelengths. Such a pulse train would have peak voltages and current greater than what the ultraviolet tube would normally operate on, but would be of very short duration and of a frequency or timing that is synchronized with airflow into openings 64. Here, a short burst of very intense ultraviolet light would allow the 185 nm wavelength to create a relatively large quantity of ozone at the surface of the ultraviolet tube, and the pulse would terminate before the ozone is destroyed by the 254 nm wavelength. By way of example only, and referring to Fig. 3, tubes 62a and 62b are about 15 centimeters long and openings 64 are each about 0.06 inches in diameter and spaced about 0.25 inches apart along the length of tubes 62a and 62b. As such, airflow through tubes 62a and 62b is essentially unrestricted. Assuming that tubes 62a and 62b have an internal volume of 18 cubic centimeters, and airflow through each tube is 3 liters per minute, with the tubes 62a and 62b spaced about a centimeter from the plasma tube, it takes about 0.277 seconds to evacuate the air and ozone between a tube 62a, 62b and the ultraviolet tube. Thus, the plasma tubes may be pulsed about 3 times a second to create an optimum amount of ozone. If the tubes 62a and 62b are 0.5 centimeters from ultraviolet tube 16, then the plasma tubes may be pulsed about 6 times a second to create am optimum amount of ozone. In this example, the pulses may be high powered pulses of a duration of 5 milliseconds to 20 milliseconds or so. In some embodiments, the shorter the pulse duration, the higher peak power may be applied to the ultraviolet tube. It is contemplated that a peak or instantaneous power of up to 1000 watts per pulse may be used. Such high powered pulses also penetrate into the water better than a continuously powered ultraviolet tube. As such, only one or two of these high power pulses are needed to kill bacteria within water flowing through water carrying tube 16. In addition, water flowing through water carrying tube 16 may be slowed to a rate so that at least one or two high power pulses are applied to organisms therein. This process creates ozone molecules between the surface of ultraviolet tube 14 and the nearest opening 64, and allows the newly-created ozone molecules to be drawn into a nearest opening 64 without being destroyed before the next burst of ultraviolet light is generated. Such a process generates significantly more ozone than a conventional ozone generator.

The desired frequency of pulses for any given rate of air flow into openings 64 can be determined by calculation, or empirically simply by measuring a quantity of ozone in a given air flow rate from the ozone generator at a given frequency of the high current, high voltage pulse train, and adjusting the frequency of the pulse train until the frequency at which a highest level of ozone is produced is determined. Alternately, the frequency of the pulse train may be set, and the air flow rate adjusted until a highest level of ozone generation is measured.

Other configurations of structures for producing a highest level of ozone are possible. For instance, Fig. 4 shows a cross-section of a ultraviolet tube 70 surrounded by a plurality of tubes 72, which may be constructed of metal, such as aluminum, stainless steel, or an ultraviolet-resistive plastic, such as one of the Teflon™-type materials, that each have a plurality of openings or a narrow slot 74 extending lengthwise along the length of tubes 72. As noted above, tubes 72 would be located very close to ultraviolet tube 70 in order to draw ozone from the region between openings or slots 74 and the surface of the ultraviolet tube. A source of suction (not shown) may be connected to one or both ends of tubes 72, or to intermediate locations between the ends of tubes 72. In other embodiments, the embodiment of Fig. 4 may be mounted in a housing, such as shown in Fig. 1, and the interior pressurized by a compressor, such as compressor 66, to force ozone and air into openings or slots 74 from very close to the surface of ultraviolet tube 70. Fig. 7 shows the same embodiment as Fig. 4, except that some of the air carrying tubes 72 are omitted so that a water carrying tube 16 may be mounted in close proximity as described above to ultraviolet tube 70.

Fig. 5 shows a cross section of an embodiment wherein a ultraviolet tube 70 is surrounded by an inner tube 76 and an outer tube 78. Tube 76 has a plurality of slots or openings 80 through which air is drawn, with the solid outer tube 78 closed at one end with the other end connected to a source of suction. Tube 76 is open to a source of air or oxygen, such as at one or both ends, or from middle regions of tube 76, so that air or oxygen is drawn into openings 80 from the closely-spaced region between ultraviolet tube 70 and inner tube 76. In other embodiments, and as described with respect to Fig. 4, the embodiment of Fig. 5 may be mounted in a housing as shown in Fig. 1, and a compressor used to pressurize the interior of tube 76 in order to drive air and ozone from between the region between the surface of ultraviolet tube 70 and tube 76 into openings or slots 80, where the air and ozone is captured by outer tube 78.

In the embodiments of Figs. 4 and 5, it is significant to note that air and ozone may be drawn off at the ends of the tubular structures, such as tubes 72 and 78, or from intermediate locations between the ends of the tubes 72 and 78, or both. As such, for larger ozone generators, ozone may be drawn off from both ends of tubes 72, 78, and from several ports between the ends of tubes 72, 78. This prevents ozone moving in the tubes past openings or slots 74, 80 from being exposed to additional ultraviolet light shining through the openings or slots 74, 80. Also, the interiors of tubes 72, 76, 80 may be darkened to absorb ultraviolet light so that the undesirable 255 nm wavelength is not reflected within these tubes. In addition, and as shown in Fig. 4, a multitude of tubes 72 may be closely spaced together, or even touching, around ultraviolet tube 70. This would eliminate the need for any reflectors around ultraviolet tube or tubes 70, but also would block ultraviolet light from reaching a water-carrying tube 16 of Fig. 1. However, the embodiments of Figs. 4 and 5 may form the basis for a very efficient ozone generator for providing a mixture of air and ozone for applying to water, or for sanitizing air.

Referring to Fig. 7, a hybrid sanitizer is disclosed wherein some of tubes 72 are connected to Venturis that support a water carrying tube as described above for providing ozonated air to a flow of water through the water carrying tube 16, and others of tubes 72 are connected for another purpose, such as sanitizing air. Here, one application is for commercial ice makers such as found in hotels, motels and other facilities where relatively large ice makers are found. In this application, ozonated air from some of tubes 72 connected as described to Venturi suction ports may be provided to water flowing through tube 16 for sanitizing water from which ice is made. Where the ice is stored in a refrigerated compartment prior to use, such as in the aforementioned hotel, motel, convenience store or the like, air in the ice-storing compartment may also be ozonated by connecting others of tubes 72 to an air compressor for drawing ozonated air into the interior of the ice-storing compartment, sterilizing the air within the compartment. Here, a housing for the sanitizer may be air tight, and compressed air provided to the interior of the compartment to force air into tubes 72 via openings 74. Those tubes 72 not connected to a Venturi suction port would be connected to the interior of the ice compartment. Such a construction would not only provide ozonated air for the ice compartment, but would also augment the suction from the Venturi suction ports that provide ozonated air to the water flowing through water carrying tube 16.

In yet another embodiment where it is desired that less ozone and more hydroxyl radicals are to be produced, and referring to Fig. 6, an ultraviolet tube 70 may be surrounded by a plurality of tubes 72 as shown in Fig. 4, except that the openings or slots 74 are oriented away from the surface of ultraviolet tube 70. In this embodiment, more of the ozone molecules created at the surface of ultraviolet tube 70 are destroyed by the 255 nm wavelength of the ultraviolet light, which also as noted above, creates more free hydroxyl radicals that also can be used for sanitization or other purposes. If necessary, humidified air may be provided to the region around ultraviolet tube 70 in order to create a larger quantity of hydroxyl radicals.

In any of the embodiments as described, the ultraviolet tubes may be pulsed as described at a predetermined frequency and at high peak power levels in order to generate more ozone, or operated continulusly in a conventional manner. Further, individual elements of the various described embodiments may be combined in any manner to provide a beneficial embodiment. For instance, it should be evident that the disclosed embodiments will work equally well whether airflow through the various embodiments is generated by a Venturi, an air compressor or another suction or pressure developing device. Where pressure is needed within the housing, as where a compressor is used to force air into the air-carrying tubes, the housing would be made airtight. Further, also as described, the various embodiments may be used for creating a sanitizer for sanitizing air or water, or a hybrid sanitizer may be constructed for sanitizing both air and water. Also, where the number of air tubes exceeds the number of Venturi suction ports to which the air tubes are connected, the air tubes may be connected together with air tees.

Having thus described my invention and the manner of its use, it should be apparent to those skilled in the relevant arts that incidental changes may be made to my invention that fairly fall within the scope of the following appended claims, wherein I claim:

## Claims

1. A sanitizer system comprising:
at least one ultraviolet lamp (14),
an ultraviolet-transparent, water carrying tube (16) positioned adjacent said ultraviolet lamp (14),
at least one Venturi (24) having at least one suction port (30), a water inlet port (26) and a water outlet port (28), said water outlet port (28) supporting one end of said ultraviolet-transparent water carrying tube (16),
said at least one suction port (30) of said at least one Venturi (24) oriented to draw ozonated air directly from a region around said at least one ultraviolet lamp (14);
further comprising a mixer supporting an opposite end of said ultraviolet-transparent water tube (16);
wherein said mixer is a second Venturi (22), said second Venturi having a second water inlet (26), a second water outlet (28) and at least one second suction port (30), said second water inlet (26) supporting the other end of said ultraviolet-transparent water tube (16), and said second at least one suction port (30) being oriented near the ultraviolet-transparent water tube (16) to draw said ozonated air directly from said region around said at least one ultraviolet lamp (14).

2. A sanitizer system as set forth in claim 1 further comprising a housing (12) enclosing said at least one ultraviolet lamp (14) and said ultraviolet-transparent water
carrying tube (16), with ends of said housing (12) supporting said at least one Venturi (24), said second Venturi (22).

3. A sanitizer system as set forth in claim 2 further comprising at least one external Venturi suction port on at least one of said at least one Venturi (24) and said second Venturi (22), said external suction port extending outside of said housing, and connectable to at least one source of chemicals for injecting said at least one source of chemicals either upstream or downstream of said housing.

4. A sanitizer system as set forth in claim 3 wherein said sanitizer system further comprises a reflector around said at least one ultraviolet lamp, for reflecting ultraviolet light into said water carrying tube (16).

5. A sanitizer system as set forth in claim 1 further comprising a plurality of ultraviolet lamps (14) positioned adjacent said water carrying tube (16).

6. A sanitizer system as set forth in claim 1 further comprising at least one air tube (62a, 62b) connected to said at least one suction port of said at least one Venturi, said at least one air tube (62a, 62b) extending the length of said at least one ultraviolet lamp (14) and in close proximity with said at least one ultraviolet lamp, said at least one air tube (62a, 62b) further having one or more openings (64) therein facing a surface of said at least one ultraviolet lamp (14), for drawing said ozonated air directly from said region around said at least one ultraviolet lamp (14) and injecting said ozonated air into water
flowing through said water carrying tube (16) prior to exposing said water to ultraviolet light from said at least one ultraviolet lamp (14).

7. A sanitizer system as set forth in claim 6 wherein said one or more openings extend along said air tube (62a, 62b) for the length of said at least one ultraviolet lamp (14).

8. A sanitizer system as set forth in claim 6 wherein said at least one air tube (62a, 62b) extends along said ultraviolet lamp within about 0.625 cm(0.25 inches) from a surface of said at least one ultraviolet lamp (14).

9. A sanitizer system as set forth in claim 6 wherein said at least one ultraviolet lamp (14) is operated by pulses of high power and of a predetermined frequency and duration, for producing a higher quantity of ozone than a conventionally operated ultraviolet lamp; optionallywherein at least said predetermined frequency of said pulses of high power is determined by at least an air flow rate of air through said air tube (62a, 62b) .

10. A sanitizing system as set forth in claim 3 further comprising:
a plurality of air tubes (62a, 62b), said plurality of air tubes connected between said first plurality of suction ports and said second plurality of suction ports,
each air tube of said plurality of air tubes having a plurality of openings therein that extend the length of a respective said ultraviolet lamp of said plurality of ultraviolet lamps, or a slot that extends the length of a respective said ultraviolet lamp of said plurality of ultraviolet lamps,
each said air tube of said plurality of air tubes positioned within about 1.25 em (0.5 inches) from a surface of a respective ultraviolet lamp, with said openings or slot facing said surface of said ultraviolet lamp.

11. A sanitizing system as set forth in claim 10 further comprising orienting said plurality of air tubes (62a, 62b) around each said ultraviolet lamp (14) of said plurality of ultraviolet lamps (14).

12. A sanitizing system as set forth in claim 11 wherein said sanitizing system further comprises applying high power pulses of a predetermined frequency and duration to said plurality of ultraviolet lamps, said predetermined frequency and duration of said high power pulses determined by rate of air flow through said air tubes.

## Patentansprüche

1. Ein Desinfektionssystem, das umfasst:
Zumindest eine Ultraviolett-Lampe (14),
ein Ultraviolett-transparentes wasserführendes Rohr (16), das angrenzend an die besagte Ultraviolett-Lampe (14) angeordnet ist,
zumindest einen Lufttrichter (24) mit zumindest einem Ansauganschluss (30), einem Wassereinlassanschluss (26) und einem Wasserauslassanschluss (28), wobei der besagte Wasserauslassanschluss (28) ein Ende des besagten Ultraviolett-transparenten wasserführenden Rohres (16) stützt,
wobei der besagte zumindest eine Ansauganschluss (30) des besagten zumindest einen Lufttrichters (24) ausgerichtet ist, um ozonisierte Luft direkt von einem Bereich um die besagte zumindest eine Ultraviolett-Lampe (14) zu ziehen;
weiterhin umfassend einen Mischer, der ein gegenüberliegendes Ende des besagten Ultraviolett-transparenten Wasserrohres (16) stützt;
wobei der besagte Mischer ein zweiter Lufttrichter (22) ist, wobei der besagte zweite Lufttrichter einen zweiten Wassereinlass (26), einen zweiten Wasserauslass (28) und zumindest einen zweiten Ansauganschluss (30) aufweist, wobei der zweite Wassereinlass (26) das andere Ende des besagten Ultraviolett-transparenten Wasserrohres (16) stützt, und der besagte zweite zumindest eine Ansauganschluss (30) derart nahe zu dem Ultraviolett-transparenten Wasserrohr (16) ausgerichtet ist, um die besagte ozonisierte Luft direkt von dem besagten Bereich um die besagte zumindest eine Ultraviolett-Lampe (14) zu ziehen.

2. Ein Desinfektionssystem wie in Anspruch 1 dargelegt, das weiterhin ein Gehäuse (12) umfasst, das die besagte zumindest eine Ultraviolett-Lampe (14) und das besagte Ultraviolett-transparente wasserführende Rohr (16) umschließt, mit Enden des besagten Gehäuses (12), die den besagten zumindest einen Lufttrichter (24), den besagten zweiten Lufttrichter (22) stützen.

3. Ein Desinfektionssystem wie in Anspruch 2 dargelegt, das weiterhin zumindest einen externen Venturi-Ansauganschluss an zumindest einem des besagten zumindest einen Lufttrichters (24) und dem besagten zweiten Lufttrichter (22) umfasst, wobei der externe Ansauganschluss sich außerhalb des besagten Gehäuses erstreckt und an zumindest eine Quelle von Chemikalien anschließbar ist zum Einspritzen von der besagten zumindest einen Quelle von Chemikalien entweder stromaufwärts oder stromabwärts von dem besagten Gehäuse.

4. Ein Desinfektionssystem wie in Anspruch 3 dargelegt, wobei das besagte Desinfektionssystem weiterhin einen Reflektor um die besagte zumindest eine Ultraviolett-Lampe umfasst zum Reflektieren von ultraviolettem Licht in das besagte wasserführende Rohr (16) hinein.

5. Ein Desinfektionssystem wie in Anspruch 1 dargelegt, das weiterhin eine Vielzahl von Ultraviolett-Lampen (14) umfasst, die angrenzend an das besagte wasserführende Rohr (16) angeordnet sind.

6. Das Desinfektionssystem wie in Anspruch 1 dargelegt, das weiterhin zumindest ein Luftrohr (62a, 62b) umfasst, das mit dem besagten zumindest einen Ansauganschluss des besagten zumindest einen Lufttrichters verbunden ist, wobei das zumindest eine Luftrohr (62a, 62b) sich der Länge der besagten zumindest einen Ultraviolett-Lampe (14) nach und in unmittelbarer Nähe zu der besagten zumindest einen Ultraviolett-Lampe erstreckt, wobei das zumindest eine Luftrohr (62a, 62b) weiterhin eine oder mehrere Öffnungen (64) darin aufweist, die einer Oberfläche der zumindest einen Ultraviolett-Lampe (14) zugewandt sind zum Ziehen von der besagten ozonisierten Luft direkt von dem besagten Bereich um die besagte zumindest eine Ultraviolett-Lampe (14) und Einspritzen der besagten ozonisierten Luft in Wasser hinein, das durch das besagte wasserführende Rohr (16) fließt, bevor das besagte Wasser ultraviolettem Licht von der besagten zumindest einen Ultraviolett-Lampe (14) ausgesetzt ist.

7. Ein Desinfektionssystem wie in Anspruch 6 dargelegt, wobei die besagte eine oder mehreren Öffnungen sich entlang des besagten Luftrohres (62a, 62b) für die Länge der besagten zumindest einen Ultraviolett-Lampe (14) erstrecken.

8. Das Desinfektionssystem wie in Anspruch 6 dargelegt, wobei das besagte zumindest eine Luftrohr (62a, 62b) sich entlang der Ultraviolett-Lampe innerhalb von ungefähr 0,625 cm (0,25 Zoll) von einer Oberfläche der besagten zumindest einen Ultraviolett-Lampe (14) erstreckt.

9. Ein Desinfektionssystem wie in Anspruch 6 dargelegt, wobei die besagte zumindest eine Ultraviolett-Lampe (14) durch Pulse hoher Energie und von einer vorbestimmten Frequenz und Dauer angetrieben ist zum Erzeugen einer höheren Quantität von Ozon als eine konventionell angetriebene Ultraviolett-Lampe; wobei optional zumindest die besagte vorbestimmte Frequenz der besagten Pulse hoher Energie durch zumindest eine Luftflussrate von Luft durch das besagte Luftrohr (62a, 62b) bestimmt ist.

10. Ein Desinfektionssystem wie in Anspruch 3 dargelegt, das weiterhin umfasst:
Eine Vielzahl von Luftrohren (62a, 62b), wobei die besagte Vielzahl von Luftrohren zwischen der besagten ersten Vielzahl von Ansauganschlüssen und der besagten zweiten Vielzahl von Ansauganschlüssen verbunden sind,
wobei jedes Luftrohr der besagten Vielzahl von Luftrohren eine Vielzahl von Öffnungen darin aufweist, die sich der Länge einer entsprechenden besagten Ultraviolett-Lampe der besagten Vielzahl von Ultraviolett-Lampen nach erstreckt oder einen Schlitz aufweist, der sich der Länge einer entsprechenden besagten Ultraviolett-Lampe der besagten Vielzahl von Ultraviolett-Lampen nach erstreckt,
wobei jedes besagte Luftrohr der besagten Vielzahl von Luftrohren innerhalb von ungefähr 1,25 cm (0,5 Zoll) von einer Oberfläche einer entsprechenden Ultraviolett-Lampe angeordnet ist, wobei die besagten Öffnungen oder der besagte Schlitz der besagten Oberfläche der besagten Ultraviolett-Lampe zugewandt sind/ist.

11. Ein Desinfektionssystem wie in Anspruch 10 dargelegt, das weiterhin ein Ausrichten der besagten Vielzahl von Luftrohren (62a, 62b) um jede besagte Ultraviolett-Lampe (14) der besagten Vielzahl von Ultraviolett-Lampen (14) umfasst.

12. Ein Desinfektionssystem wie in Anspruch 11 dargelegt, wobei das besagte Desinfektionssystem weiterhin ein Anwenden von Hochenergiepulsen einer vorbestimmten Frequenz und Dauer auf die besagte Vielzahl von Ultraviolett-Lampen umfasst, wobei die besagte vorbestimmte Frequenz und Dauer der besagten Hochenergiepulse durch eine Rate von Luftfluss durch die besagten Luftrohre bestimmt sind.

## Revendications

1. Système d'assainissement, comprenant :
au moins une lampe à rayons ultraviolets (14),
un tube d'acheminement d'eau, transparent aux rayons ultraviolets (16) positionné de manière adjacente à ladite lampe à rayons ultraviolets (14),
au moins un venturi (24) ayant au moins un orifice d'aspiration (30), un orifice d'amenée d'eau (26) et un orifice d'évacuation d'eau (28), ledit orifice d'évacuation d'eau (28) soutenant une extrémité dudit tube d'acheminement d'eau transparent aux rayons ultraviolets (16),
ledit au moins un orifice d'aspiration (30) dudit au moins un venturi (24) étant orienté de façon à aspirer de l'air ozoné directement à partir d'une région autour de ladite au moins une lampe à rayons ultraviolets (14) ;
comprenant en outre un mélangeur soutenant une extrémité opposée dudit tube d'eau transparent aux rayons ultraviolets (16) ;
dans lequel ledit mélangeur est un second venturi (22), ledit second venturi ayant un second orifice d'amenée d'eau (26), un second orifice d'évacuation d'eau (28) et au moins un second orifice d'aspiration (30), ledit second orifice d'amenée d'eau (26) soutenant l'autre extrémité dudit tube d'eau transparent aux rayons ultraviolets (16) et ledit au moins un second orifice d'aspiration (30) étant orienté à proximité du tube d'eau transparent aux rayons ultraviolets (16) pour aspirer ledit air ozoné directement de ladite région autour de ladite au moins une lampe à rayons ultraviolets (14).

2. Système d'assainissement selon la revendication 1, comprenant en outre un boitier (12) renfermant ladite au moins une lampe à rayons ultraviolets (14) et ledit tube d'acheminement d'eau transparent aux rayons ultraviolets (16), les extrémités dudit boitier (12) soutenant ledit au moins un venturi (24), ledit second venturi (22).

3. Système d'assainissement selon la revendication 2, comprenant en outre au moins un orifice d'aspiration de venturi externe sur au moins un dudit au moins un venturi (24) et dudit second venturi (22), ledit orifice d'aspiration externe s'étendant à l'extérieur dudit boitier et pouvant être connecté à au moins une source de produits chimiques pour injecter ladite au moins une source de produits chimiques soit en amont soit en aval dudit boitier.

4. Système d'assainissement selon la revendication 3, dans lequel ledit système d'assainissement comprend en outre un réflecteur autour de ladite au moins une lampe à rayons ultraviolets, pour réfléchir la lumière ultraviolette à l'intérieur dudit tube d'acheminement d'eau (16).

5. Système d'assainissement selon la revendication 1, comprenant en outre une pluralité de lampes à rayons ultraviolets (14) positionnées de manière adjacente au dit tube d'acheminement d'eau (16).

6. Système d'assainissement selon la revendication 1, comprenant en outre au moins un tube d'air (62a, 62b) relié au dit au moins un orifice d'aspiration dudit au moins un venturi, ledit au moins un tube d'air (62a, 62b) s'étendant sur la longueur de ladite au moins une lampe à rayons ultraviolets (14) et à proximité étroite avec ladite au moins une lampe à rayons ultraviolets, ledit au moins un tube d'air (62a, 62b) comprenant en outre une ou plusieurs ouvertures (64) à l'intérieur de celui-ci en regard d'une surface de ladite au moins une lampe à rayons ultraviolets (14), pour aspirer ledit air ozoné directement de ladite région autour de ladite au moins une lampe à rayons ultraviolets (14) et injecter ledit air ozoné dans de l'eau s'écoulant à travers ledit tube d'acheminement d'eau (16) avant d'exposer ladite eau à la lumière ultraviolette provenant de ladite au moins une lampe à rayons ultraviolets (14).

7. Système d'assainissement selon la revendication 6, dans lequel ladite une ou lesdites plusieurs ouvertures s'étendent le long dudit tube d'air (62a, 62b) sur la longueur de ladite au moins une lampe à rayons ultraviolets (14).

8. Système d'assainissement selon la revendication 6, dans lequel au moins un tube d'air (62a, 62b) s'étend le long de ladite lampe à rayons ultraviolets selon une distance d'environ 0,625 cm (0,25 pouces) à partir d'une surface de ladite au moins une lampe à rayons ultraviolets (14).

9. Système d'assainissement selon la revendication 6, dans lequel ladite au moins une lampe à rayons ultraviolets (14) fonctionne par des impulsions à haute puissance et à une fréquence et une durée prédéterminées, pour produire une quantité d'ozone supérieure comparativement à une lampe à rayons ultraviolets fonctionnant de manière conventionnelle ; en option dans lequel au moins ladite fréquence prédéterminée desdites impulsions à haute puissance est déterminée par au moins un débit d'air traversant ledit tube d'air (62a, 62b).

10. Système d'assainissement selon la revendication 3, comprenant en outre :
une pluralité de tubes d'air (62a, 62b), ladite pluralité de tubes d'air étant reliée entre ladite première pluralité d'orifices d'aspiration et ladite seconde pluralité d'orifices d'aspiration,
chaque tube d'air de ladite pluralité de tubes d'air ayant une pluralité d'ouvertures à l'intérieur de celui-ci qui s'étendent sur la longueur d'une dite lampe à rayons ultraviolets respective de ladite pluralité de lampes à rayons ultraviolets, ou une fente qui s'étend sur la longueur d'une dite lampe à rayons ultraviolets respective de ladite pluralité de lampes à rayons ultraviolets,
chacun desdits tubes d'air de ladite pluralité de tubes d'air étant positionné à une distance d'environ 1,25 cm (0,5 pouces) à partir d'une surface d'une lampe à rayons ultraviolets respective, avec lesdites ouvertures ou fente en regard de ladite surface de ladite lampe à rayons ultraviolets.

11. Système d'assainissement selon la revendication 10, comprenant en outre l'orientation de ladite pluralité de tubes d'air (62a, 62b) autour de chacune desdites lampes à rayons ultraviolets (14) de ladite pluralité de lampes à rayons ultraviolets (14).

12. Système d'assainissement selon la revendication 11, dans lequel ledit système d'assainissement comprend en outre l'application d'impulsions à haute puissance à une fréquence et une durée prédéterminées à ladite pluralité de lampes à rayons ultraviolets, lesdites fréquences et durée prédéterminées desdites impulsions à haute puissance étant déterminées par un débit d'air traversant lesdits tubes d'air.
